# EUROPÄISCHE PATENTSCHRIFT

(11) **EP 0 671 867 B1**
(45) Veröffentlichungstag und Bekanntmachung des Hinweises auf die Patenterteilung: **24.11.1999**
(21) Anmeldenummer: 95102698.8
(22) Anmeldetag: 24.02.1995
(51) Int. Cl.: H05B 41/29, H02H 9/00, H02M 1/00

(54) **Schaltungsanordnung zum Betrieb von Entladungslampen**
Circuit for operating a discharge lamp
Circuit d'alimentation de lampes à décharge

(30) Priorität: 11.03.1994 DE 4408313
(43) Veröffentlichungstag der Anmeldung: 13.09.1995
(73) Patentinhaber: Patent-Treuhand-Gesellschaft für elektrische Glühlampen mbH, 81543 München (DE)
(72) Erfinder: Huber, Andreas, D-82216 Maisach (DE); Osterried,Josef, D-85521 Ottobrunn (DE)

(56) Entgegenhaltungen:
- EP-A- 0 440 245
- DE-A- 3 308 320

## Beschreibung

Die Erfindung betrifft eine Schaltungsanordnung zum hochfrequenten Betrieb von Entladungslampen gemäß dem Oberbegriff des Anspruchs 1.

Elektronische Vorschaltgeräte benötigen zum Betrieb von Entladungslampen in ihren Schaltungsanordnungen interne Energiespeicherelemente, um die Energielücken, die beim Netznulldurchgang entstehen, nicht auf den Lampenbetrieb zu übertragen und damit einen vom 50 bzw. 60 Hz Netz unabhängigen Lichtstrom zu erhalten. Als Energiespeicherelement kommt dabei bevorzugt ein Zwischenkreis- oder Glättungskondensator, meist in Form eines Elektrolytkondensators in Frage, da dieser ein günstiges Volumen/Energie-Verhältnis besitzt.

Bei elektronischen Vorschaltgeräten ist dieser Zwischenkreis- oder Glättungskondensator nicht direkt parallel zum Ausgang des Brückengleichrichters geschaltet, sondern die Schaltungsanordnung weist zwischen dem Brückengleichrichter und dem Zwischenkreiskondensator noch ein aktives Oberwellenfilter in Form eines Hochsetzstellers auf. Dieses sorgt für die in fast allen Ländern vorgeschriebene sinusförmige Stromaufnahme aus dem Netz. Beim Einschalten eines Vorschaltgerätes können aber je nach Rest-Ladezustand des Zwischenkreiskondensators und je nach Momentanwert der Netzspannung enorme Einschaltströme (Ladeströme) fließen.

Diese Einschaltströme wirken sich nicht nur negativ auf die Netzschalter aus, sondern bedingen auch eine Überdimensionierung der Dioden des Brückengleichrichters und aller sonstigen Halbleiterstrekken, die in den Ladestromkreis des Zwischenkreiskondensators geschaltet sind. Außerdem können diese Einschaltströme auch die Netzeingangssicherung des elektronischen Vorschaltgeräts und die gebäudeseitig vorgesehenen Sicherungsautomaten beeinflussen. Dies gilt besonders beim parallelen Einschalten mehrerer elektronischer Vorschaltgeräte an einer Phase.

Das Problem wurde bisher entweder durch einen Heißleiter (NTC), der zwischen den positiven Ausgang des Brückengleichrichters und den entsprechenden Eingang des Hochsetzstellers geschaltet ist, oder durch einen Ladewiderstand, der im Betrieb von einem Relais überbrückt wird, gelöst. Nachteilig bei der Verwendung eines Relais ist jedoch, daß dieses ein großes Bauvolumen aufweist und durch zusätzlich benötigte Bauteile hohe Kosten entstehen. Ein Heißleiter erzeugt dagegen hohe Verluste im Dauerbetrieb. Außerdem ist die Strombegrenzung abhängig von der Temperatur des Heißleiters, so daß bei kurzzeitigen Netzstromunterbrechungen die Einschaltstrombegrenzung ausfallen kann.

Aufgabe der Erfindung ist daher, eine Schaltung zu schaffen, die einen definierten maximalen Einschaltstrom unabhängig von der Umgebungstemperatur sicherstellt. Die Schaltung sollte aus wenigen Bauelementen bestehen und kostengünstig zu realisieren sein.

Die Aufgabe wird durch die kennzeichnenden Merkmale des Anspruchs 1 und 2 gelöst. Weitere bevorzugte Merkmale sind den Unteransprüchen zu entnehmen.

Durch Schaltung eines Thyristors zwischen den Gleichstromausgang des Gleichrichters bzw. von Thyristoren zwischen die Wechselstromeingänge des Gleichrichters und den Verknüpfungspunkt des Eingangskondensators mit der Drossel im Hochsetzsteller sperrt der bzw. die Thyristoren so lange, bis die Spannung am Zwischenkreiskondensator höher als die Spannung am Eingangskondensator ist. Während dieser Zeit erfolgt die Aufladung des Zwischenkreiskondensators nur über den parallel zum Thyristor liegenden Widerstand, wobei der Ladestrom durch den Widerstand definiert ist. Der Einschaltstrom kann so optimal festgelegt werden. Die Triggerung des Thyristors wird allein durch den Betrieb des Hochsetzstellers gesteuert. Eine zusätzliche Triggereinheit z.B. in Form eines Optokopplers oder einer Hilfswicklung auf der Drossel des Hochsetzstellers ist nicht erforderlich.

Die Verwendung und Verschaltung von zwei Thyristoren mit den Wechselstromeingängen des Brückengleichrichters bietet den Vorteil einer weiteren Reduzierung der Verlustleistung, da der Strompfad hier lediglich zwei Halbleiterstrecken beinhaltet. Bei Verwendung von nur einem Thyristor liegen im Strompfad drei Halbleiterstrecken. Die Schaltungsvariante mit zwei Thyristoren eignet sich daher besonders für elektronische Vorschaltgeräte mit großer Leistung.

Der Kondensator zwischen der Kathode und dem Gate der Thyristoren verhindert vorteilhaft ein "Über-Kopf-Zünden" des Thyristors. Unter "Über-Kopf-Zünden" des Thyristors ist ein Stromfluß aus der parasitären Kapazität des Thyristors in das Gate desselben Thyristors und ein dadurch verursachtes Durchschalten des Thyristors zu verstehen.

Die Erfindung ist anhand der nachfolgenden Figuren näher veranschaulicht.
- Figur 1: zeigt ein Blockschaltbild einer Schaltungsanordnung zum hochfrequenten Betrieb einer Entladungslampe
- Figur 2: zeigt eine erfindungsgemäße Ausführungsform des aus Brückengleichrichter, Hochsetzsteller und Zwischenkreiskondensator bestehenden Schaltungsteils
- Figur 3: zeigt eine weitere erfindungsgemäße Ausführungsform des aus Brückengleichrichter, Hochsetzsteller und Zwischenkreiskondensator bestehenden Schaltungsteils

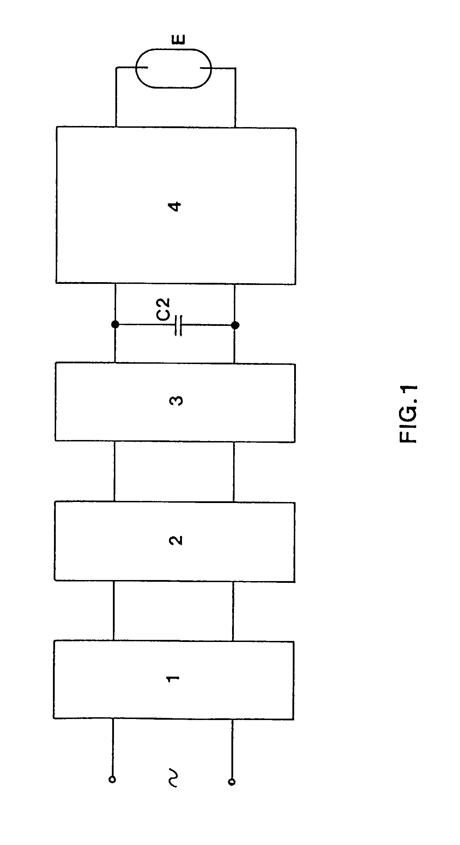

Figur 1 zeigt ein Blockschaltbild einer Schaltungsanordnung zum hochfrequenten Betrieb einer Entladungslampe E. Die Schaltungsanordnung setzt sich aus einem Funkentstörfilter 1, einem Brückengleichrichter 2, einem Hochsetzsteller 3 als Oberwellenfilter, einem nachgeschalteten Zwischenkreiskondensator C2 und einem Wechselrichter 4 zusammen.

Im weiteren soll nun nur der Aufbau des aus Brükkengleichrichter 2, Hochsetzsteller 3 und nachgeschaltetem Zwischenkreiskondensator C2 bestehenden Schaltungsteils näher betrachtet werden. Die restlichen Schaltungsteile besitzen einen bekannten Schaltungsaufbau und tragen nicht zur Erfindung bei.

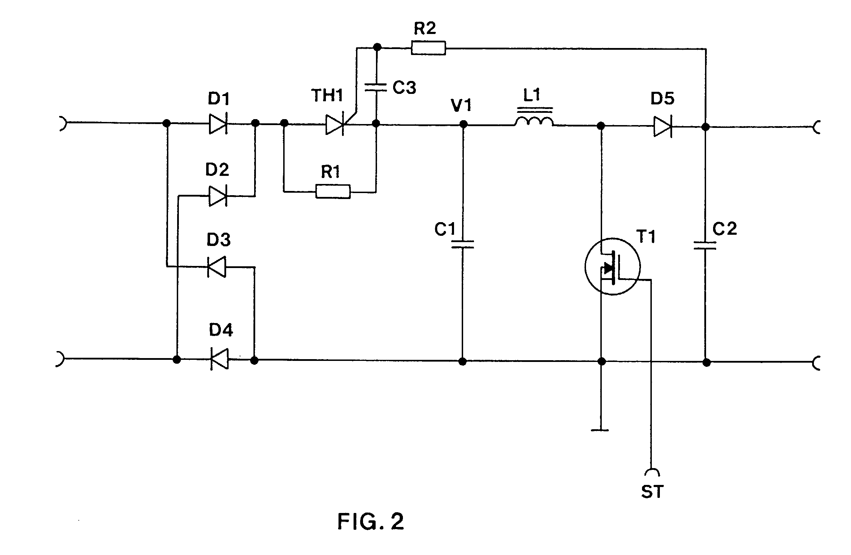

Figur 2 zeigt eine erste Ausführungsform des aus Brückengleichrichter, Hochsetzsteller und Zwischenkreiskondensator bestehenden Schaltungsteils im Detail. Der Brückengleichrichter setzt sich aus den vier Dioden D1 bis D4 zusammen. Parallel zum Ausgang des Brückengleichrichters folgt zuerst ein Eingangskondensator C1. Anschließend folgt parallel zum Eingangskondensator C1 die Reihenschaltung aus einer Drossel L1 und der Drain-Source-Strecke eines MOS-FET-Transistors T1, wobei die Drossel L1 am positiven Ausgang des Brückengleichrichters angeschlossen ist. Parallel zum Transistor T1 folgt sodann die Reihenschaltung aus einer Diode D5 in Gleichstromdurchlaßrichtung und eines Zwischenkreiskondensators C2.

Erfindungsgemäß ist zwischen den positiven Ausgang des Brückengleichrichters und den Verbindungspunkt V1 zwischen Eingangskondensator C1 und Drossel L1 die Anoden-Kathoden-Strecke eines Thyristors TH1 geschaltet. Das Gate des Thyristors TH1 ist über einen Widerstand R2 mit dem positiven Pol des Zwischenkreiskondensators C2 verbunden. Außerdem ist die Anoden-Kathoden-Strecke des Thyristors TH1 durch einen Widerstand R1 überbrückt und zwischen die Kathode und das Gate des Thyristors TH1 ist ein Kondensator C3 geschaltet. Die Steuerung des MOS-FET-Transistors T1 erfolgt über den Steueranschluß ST.

Zur Funktionsweise der Einschaltstrombegrenzung: Der Zwischenkreiskondensator C2 sei zunächst völlig entladen. Beim Einschalten des Netzes fließt ein Strom über die Dioden D1 und D4, bzw. D2 und D3 (je nach Polarität des Netzes beim Einschalten) des Brückengleichrichters und den Widerstand R1 in den Eingangskondensator C1 und parallel dazu über die Drossel L1 und die Diode D5 in den Zwischenkreiskondensator C2. Da die Spannung am Kondensator C1, solange der Hochsetzsteller über den Steueranschluß ST nicht aktiviert ist, gleich der Spannung am Zwischenkreiskondensator C2 ist, kann der Thyristor TH1 nicht zünden, da kein Gatestrom vorhanden ist. Der Ladestrom des Zwischenkreiskondensators C2 wird somit über den Widerstand R1 definiert. Wird nun der Hochsetzsteller über ST eingeschaltet, so folgt die Spannung am Kondensator C1 näherungsweise dem Betrag der Netzspannung und die Spannung am Zwischenkreiskondensator C2 erhöht sich. Es ergibt sich nun eine Spannungsdifferenz zwischen der Kathode des Thyristors TH1 und der Spannung am Zwischenkreiskondensator C2, so daß ein Gatestrom in den Thyristor TH1 fließen kann.

Die Spannungsdifferenz ist beim Nulldurchgang des Netzes am größten, so daß genau zum Zeitpunkt, an dem der Thyristor TH1 gezündet werden muß, ein ausreichender Gatestrom zur Verfügung steht. Der Strom fließt also während des Normalbetriebs der Schaltungsanordnung nicht mehr nur über den Widerstand R1, sondern hauptsächlich durch den Thyristor TH1. Die Verluste am Thyristor ergeben sich dann aus dem Spannungsabfall Anode - Kathode am Thyristor TH1, multipliziert mit dem Gleichrichtmittelwert des Netzstroms.

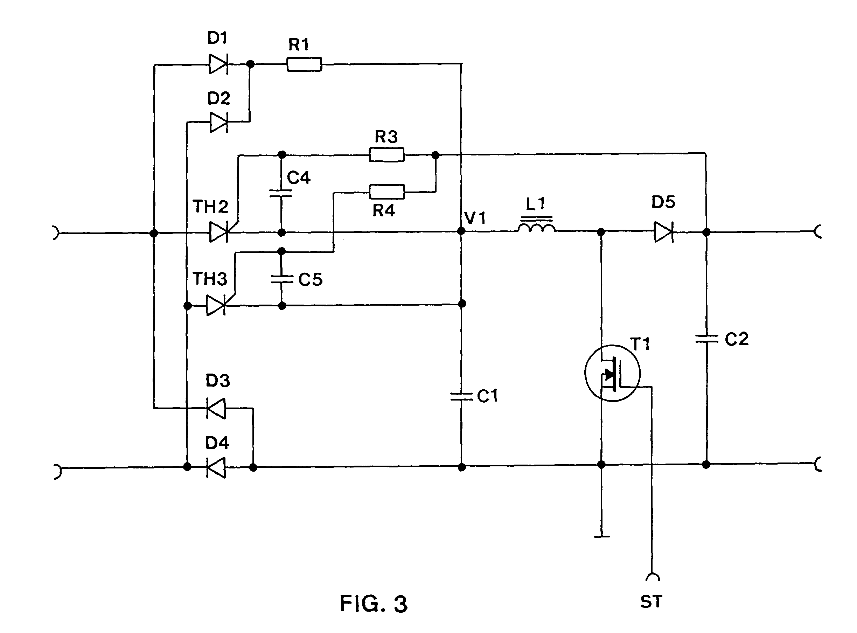

Figur 3 zeigt eine weitere erfindungsgemäße Ausführung des aus Brückengleichrichter, Hochsetzsteller und Zwischenkreiskondensator bestehenden Schaltungsteils. Der Brückengleichrichter, der Hochsetzsteller und der Zwischenkreiskondensator entsprechen dem in Figur 2 gezeigten Aufbau. Die Bauelemente dieser Teile tragen daher auch dieselben Bezeichnungen. Zur Einschaltstrombegrenzung weist dieses Schaltungsteil zwei Thyristoren TH2, TH3 auf, die mit ihrer Anode jeweils mit einem Wechselstromeingang und mit ihrer Kathode mit dem Verbindungspunkt V1 zwischen Eingangskondensator C1 und Drossel L1 verbunden sind. Die Gate-Eingänge der beiden Thyristoren TH2 und TH3 sind über Widerstände R3 bzw. R4 mit dem postiven Pol des Zwischenkreiskondensators C2 verbunden. Außerdem sind die Kathoden der Thyristoren über Kondensatoren C4, C5 mit ihren Gate-Eingängen verbunden und parallel zur Anoden-Kathoden-Strecke der Thyristoren TH2, TH3 ist in Reihe zu den Dioden D1 und D2 ein Widerstand R1 geschaltet.

Die Funktionsweise der Einschaltstrombegrenzung entspricht der unter Figur 2 aufgeführten Schaltung. Allerdings bietet diese Schaltungsvariante den Vorteil, daß beim Normalbetrieb der Schaltung der Eingangsstrom jeweils nur zwei Halbleiterbauelemente (im Gegensatz zur Schaltung der Figur 2, wo es drei Halbleiterbauelemente sind) durchfließen muß. Dadurch ergibt sich eine geringere Verlustleistung, was sich insbesondere bei Vorschaltgeräten hoher Leistung auszahlt.

In der nachfolgenden Tabelle sind die verwendeten Bauteile für ein erfindungsgemäßes Schaltungsteil gemäß Fig. 2 als Teil eines Vorschaltgerätes zum Betreiben einer Natriumhochdruckentladungslampe mit einer Nennleistung von 80 W zusammengestellt:

| | |
|---|---|
| D1 bis D4 | 1 N 4007 |
| TH1 | C 106 M |
| R1 | 33 Ω |
| R2 | 1 M Ω |
| C1 | 150 nF |
| C2 | 75 µF |
| C3 | 22 nF |
| L1 | 1,44 mH |
| D5 | BYW 36 |
| T1 | IRF 830 |

## Patentansprüche

1. Schaltungsanordnung zum hochfrequenten Betrieb von Entladungslampen (E) mit einem Brückengleichrichter (2), mit einem nachgeschalteten Hochsetzsteller (3), der eine Drossel (L1), ein Schaltelement, einen Eingangskondensator (C1) und eine Diode (D5) beinhaltet, sowie mit einem parallel zum Ausgang des Hochsetzstellers (3) geschalteten Zwischenkreis- oder Glättungskondensator (C2), dadurch gekennzeichnet, daß
- zwischen den positiven Ausgang des Brückengleichrichters (2) und den Verbindungspunkt (V1) des Kondensators (C1) und der Drossel (L1) des Hochsetzstellers (3) ein Thyristor (TH1) mit seiner Anoden-Kathoden-Strecke geschaltet ist, wobei die Anode dem Ausgang des Brückengleichrichters (2) zugewandt ist
- das Gate des Thyristors (TH1) über einen Widerstand (R2) mit dem positiven Pol des Zwischenkreis- oder Glättungskondensators (C2) verbunden ist und
- parallel zur Anoden-Kathoden-Strecke des Thyristors (TH1) ein Widerstand (R1) geschaltet ist.

2. Schaltungsanordnung zum hochfrequenten Betrieb von Entladungslampen mit einem Brückengleichrichter (2), mit einem nachgeschalteten Hochsetzsteller (3), der eine Drossel (L1), ein Schaltelement, einen Eingangskondensator (C1) und eine Diode (D5) beinhaltet, sowie mit einem parallel zum Ausgang des Hochsetzstellers (3) geschalteten Zwischenkreis- oder Glättungskondensator (C2), dadurch gekennzeichnet, daß
- zwischen jeden der beiden Wechselspannungseingänge des Brückengleichrichters (2) und dem Verbindungspunkt (V1) des Eingangskondensators (C1) mit der Drossel (L1) des Hochsetzstellers (3) je ein Thyristor (TH2, TH3) mit seiner Anoden-Kathoden-Strecke geschaltet ist, wobei die Anode dem jeweiligen Wechselspannungseingang des Brückengleichrichters (2) zugewandt ist
- das Gate jedes Thyristors (TH2, TH3) über einen Widerstand (R3, R4) mit dem positiven Pol des Zwischenkreis- oder Glättungskondensators (C2) verbunden ist und
- zwischen den positiven Ausgangspol des Brückengleichrichters (2) und den Verbindungspunkt (V1) des Eingangskondensators (C1) mit der Drossel (L1) des Hochsetzstellers (3) ein Widerstand (R1) geschaltet ist.

3. Schaltungsanordnung nach Anspruch 1 oder 2, dadurch gekennzeichnet, daß die Kathode jedes Thyristors (TH1, TH2, TH3) über einen Kondensator (C3, C4, C5) oder Widerstand mit seinem Gate verbunden ist.

4. Schaltungsanordnung nach Anspruch 1 oder 2, dadurch gekennzeichnet, daß das Schaltelement ein Transistor (T1) ist.

## Claims

1. Circuit arrangement for high-frequency operation of discharge lamps (E), having a bridge rectifier (2), having a downstream step-up controller (3) which contains an inductor (L1), a switching element, an input capacitor (Cl) and a diode (D5), as well as having an intermediate-circuit or smoothing capacitor (C2) connected in parallel with the output of the step-up controller (3), characterized in that
- a thyristor (TH1) is connected with its anode-cathode path between the positive output of the bridge rectifier (2) and the tie point (Vl) of the capacitor (Cl) and the inductor (Ll) of the step-up controller (3), the anode facing the output of the bridge rectifier (2),
- the gate of the thyristor (TH1) is connected via a resistor (R2) to the positive pole of the intermediate-circuit or smoothing capacitor (C2), and
- a resistor (Rl) is connected in parallel with the anode-cathode path of the thyristor (TH1).

2. Circuit arrangement for high-frequency operation of discharge lamps, having a bridge rectifier (2), having a downstream step-up controller (3) which contains an inductor (Ll), a switching element, an input capacitor (Cl) and a diode (D5), as well as having an intermediate-circuit or smoothing capacitor (C2) connected in parallel with the output of the step-up controller (3), characterized in that
- one thyristor (TH2, TH3) each is connected with its anode-cathode path between each of the two AC voltage inputs of the bridge rectifier (2) and the tie point (Vl) of the input capacitor (Cl) with the inductor (Ll) of the step-up controller (3), the anode facing the respective AC voltage input of the bridge rectifier (2),
- the gate of each thyristor (TH2, TH3) is connected via a resistor (R3, R4) to the positive pole of the intermediate-circuit or smoothing capacitor (C2), and
- a resistor (R1) is connected between the positive output pole of the bridge rectifier (2) and the tie point (Vl) of the input capacitor (Cl) and the inductor (Ll) of the step-up controller (3).

3. Circuit arrangement according to Claim 1 or 2, characterized in that the cathode of each thyristor (TH1, TH2, TH3) is connected to its gate via a capacitor (C3, C4, C5) or resistor.

4. Circuit arrangement according to Claim 1 or 2, characterized in that the switching element is a transistor (T1).

## Revendications

1. Montage pour faire fonctionner à haute fréquence des lampes (E) de décharge, comportant un redresseur (2) à pont, ayant un montage (3) survolteur en aval qui comprend une bobine (L1), un élément de commutation, un condensateur (Ci) d'entrée et une diode (D5), et comportant un condensateur (C2) indirect ou de lissage, branché en parallèle à la sortie du montage (3) survolteur, caractérisé en ce que
- un thyristor (TH1) est branché par sa section anode-cathode entre la sortie positive du redresseur (2) à pont et le point (V1) de liaison du condensateur (C1) et de la bobine (L1) du montage (3) survolteur, l'anode étant tournée vers la sortie du redresseur (2) à pont,
- la grille du thyristor (TH1) est reliée, par l'intermédiaire d'une résistance (R2), au pole positif du condensateur (C2) indirect ou de lissage et
- une résistance (R1) est branchée en parallèle à la section anode-cathode du thyristor (TH1).

2. Montage pour faire fonctionner à haute fréquence des lampes à décharge comportant un redresseur (2) à pont, ayant un montage (3) survolteur en aval, qui comprend une bobine (L1), un élément de commutation, un condensateur (C1) d'entrée et une diode (D5) et comportant un condensateur (C2) indirect ou de lissage branché en parallèle à la sortie du montage (3) survolteur, caractérisé en ce que
- chaque fois un thyristor (TH2,TH3) est branché par sa section anode-cathode entre chacune des deux entrées de tension alternative du redresseur (2) à pont et le point (V1) de liaison du condensateur (C1) d'entrée avec la bobine (L1) du montage (3) survolteur, l'anode étant tournée vers l'entrée de tension alternative associée du redresseur (2) à pont,
- la grille de chaque thyristor (TH2,TH3) est reliée, par l'intermédiaire d'une résistance (R3,R4), au pole positif du condensateur (C2) indirect ou de lissage et
- une résistance (R1) est branchée entre le pole de sortie positif du redresseur (2) à pont et le point (V1) de liaison du condensateur (C1) d'entrée avec la bobine (L1) du montage (3) survolteur.

3. Montage suivant la revendication 1 ou 2, caractérisé en ce que la cathode de chaque thyristor (TH1,TH2,TH3) est reliée à sa grille par l'intermédiaire d'un condensateur (C3,C4,C5) ou d'une résistance.

4. Montage suivant la revendication 1 ou 2, caractérisé en ce que l'élément de commutation est un transistor (T1).
